# DEMANDE DE BREVET EUROPEEN

(11) **EP 3 388 372 A1**
(43) Date de publication de la demande: **17.10.2018**
(21) Numéro de dépôt: 18174592.8
(22) Date de dépôt: 03.06.2015
(51) Int. Cl.: B65G 47/08, B65G 47/71, B65G 47/84

(54) **REPARTITION MULTIFILAIRE A TAQUETS LATERAUX**

(30) Priorité: 04.06.2014 FR 1401284
(62) Demande divisionnaire de: 15170377.4
(71) Demandeur: C.E.R.M.E.X. CONSTRUCTIONS ETUDES ET RECHERCHES DE MATERIELS POUR L'EMBALLAGE D'EXPEDITION, 21910 Corcelles-Les-Cîteaux (FR)
(72) Inventeur: RABEC, Dominique, 21910 CORCELLES LES CÎTEAUX (FR)
(74) Mandataire: Eltzer, Thomas

(57) **Abrégé**

L'invention concerne une installation pour répartir sur au moins deux files (F2, F3) des produits (3) initialement alignés sur une seule file (F1), ladite installation comportant : un convoyeur (1) et un dispositif de répartition (6). Le dispositif de répartition (6) comportant deux déviateurs (61, 62), disposés latéralement au convoyeur (1) et en vis-à-vis l'un de l'autre, agencés pour agir successivement sur les produits.

L'invention a aussi pour objet un procédé correspondant.

## Description

L'invention a trait au convoyage de produits alignés sur un ou plusieurs convoyeurs.

Elle concerne plus particulièrement une installation pour répartir sur au moins deux files des produits initialement alignés sur une seule file, positionnés sur un convoyeur.

On connaît du document FR 2 738 231 une installation qui comporte des moyens déflecteurs permettant de réaliser deux files de produits à partir d'une seule file. Les moyens déflecteurs comportent, d'une part, une courroie sans fin montée sur deux poulies d'axe vertical et disposée latéralement audit convoyeur et, d'autre part, un élément déflecteur fixé sur ladite courroie et suffisamment saillant pour pouvoir toucher les produits convoyés quand les moyens déflecteurs sont en position active. En particulier, l'élément déflecteur est réalisé par une succession de taquets ou train de taquets qui sont fixés côte-à-côte sur la courroie, de telle manière que, quand les moyens déflecteurs sont en position active, ils dévient transversalement un lot de produits alignés les uns derrières les autres. Une telle installation permet ainsi de créer des lots de produits répartis sur deux files. Une telle installation pourrait également permettre de dévier un produit sur deux en réduisant convenablement la cadence des produits sur le convoyeur, et éventuellement en réduisant la taille de l'élément déflecteur.

L'inconvénient d'une telle installation est qu'elle ne peut pas fonctionner à grande vitesse si les produits convoyés sont des produits instables, par exemple des produits légers qui présentent une hauteur bien plus importante que la largeur de leur base. Par exemple, les flacons tubulaires réalisés pour les aérosols sont instables et ils ont tendance à basculer et tomber lorsque l'on change leur trajectoire trop brusquement ou lorsque l'on fait varier leur vitesse de convoyage.

L'inconvénient d'une telle installation de répartition est également de devoir mettre en oeuvre une autre installation en amont, assurant la réalisation d'un écartement entre les produits ainsi qu'un dispositif de détection, placé en amont de l'installation de répartition, qui détecte les produits en entrée de l'installation pour coordonner le fonctionnement les moyens déflecteurs.

L'invention permet de pallier les inconvénients précités et notamment de la simplifier, tout en assurant des cadences plus élevées et un fonctionnement fiable même pour des produits peu stables.

Elle propose à cet effet une installation pour répartir sur au moins deux files, des produits initialement alignés sur une seule file, ladite installation comportant :
un convoyeur présentant une partie amont et une partie aval, ladite partie amont étant apte à convoyer ladite seule file de produits, suivant une direction d'amenée et une vitesse d'amenée, et ladite partie aval étant apte à convoyer lesdits produits répartis sur lesdites au moins deux files, un dispositif de répartition, placé entre la partie amont et la partie aval du convoyeur, le dispositif de répartition comportant un premier déviateur pour décaler les produits transversalement à la direction d'amenée, disposé latéralement au convoyeur.

L'installation conforme à l'invention est remarquable en ce que le dispositif de répartition comporte au moins un second déviateur, pour décaler les produits transversalement à la direction d'amenée, disposé latéralement au convoyeur et en vis-à-vis du premier déviateur, les premier et second déviateurs étant agencés pour agir l'un après l'autre sur la file de produits, les premier et second déviateurs, à base d'actionneur ou encore de bande sans fin, agissant notamment transversalement dans des sens opposés.

Elle peut également comporter des moyens d'entrainement en déplacement du convoyeur aptes à convoyer lesdits produits à une vitesse qui est supérieure à une vitesse de déplacement des premier et second déviateurs dans la direction d'amenée, en particulier supérieure à un vitesse d'entraînement des au moins un premier et second éléments déflecteurs de sorte que le produit le plus en aval, décalé par un déviateur, arrive au contact de la limite amont du déviateur en vis-à-vis, les éventuels produits suivants étant poussés par le convoyeur au contact de ce produit le plus en aval.

Autrement dit, l'installation peut permettre de régler indépendamment les vitesses d'avance du convoyeur, d'une part, et déviateurs, d'autre part. Ainsi réalisée, l'installation permet de s'affranchir des dispositifs de détection qui, dans l'Etat de la Technique, détectent l'arrivée des produits en amont du dispositif de répartition, car elle permet de traiter une file de produits accumulés et au touche à touche, grâce à la mise de vitesse d'avances différentes entre le convoyeur et les déviateurs du dispositif de répartition.

L'installation conforme à l'invention peut également comporter les caractéristiques suivantes, prises séparément ou en combinaison :
- le premier déviateur comprend une bande sans fin présentant au moins une partie agencée en oblique par rapport à la direction d'amenée du convoyeur pour pousser les produits transversalement, la partie oblique formant un angle aigu avec la direction d'amenée, l'angle étant ouvert vers la partie amont, et sur laquelle est monté au moins un premier élément déflecteur apte à dévier au moins un produit, le deuxième déviateur comprend lui aussi une bande sans fin présentant au moins une partie agencée en oblique par rapport à la direction d'amenée du convoyeur pour pousser les produits transversalement, la partie oblique formant un angle aigu avec la direction d'amenée, l'angle étant ouvert vers la partie amont, et sur laquelle est monté au moins un second élément déflecteur apte à dévier au moins un produit, les premier et second déviateurs, étant agencés en miroir l'un de l'autre et pour mettre en oeuvre successivement lesdits au moins un premier et second éléments déflecteurs sur ledit convoyeur 1
- lesdits au moins un premier et second éléments déflecteurs comportent chacun plusieurs taquets disposés les uns à la suite des autres de sorte à former un train de taquets. De cette façon, on peut aisément faire varier la longueur des éléments déflecteurs en augmentant ou en réduisant le nombre de taquets dans chaque train de taquets. On peut ainsi dévier un ou plusieurs produits suivant la longueur des taquets et la longueur des trains de taquets ;
- lesdits au moins un premier et second éléments déflecteurs présentent une même longueur qui est sensiblement égale à la longueur d'un lot d'un plusieurs produits à former. Ainsi, les éléments déflecteurs dévient chacun des lots de produits de même longueur ;
- lesdites première et seconde bandes sans fin comportent chacune plusieurs éléments déflecteurs, espacés les uns des autres d'une distance sensiblement identique à leur longueur, de sorte que le déflecteur d'un déviateur puisse se trouver entre deux déflecteurs de l'autre déviateur ce qui permet alors de définir un espace de convoyage clos pour le lot. De cette façon, les lots de produits formés, de même longueur que la longueur des trains de taquets, s'insèrent entre deux trains de taquets d'un même déviateur ce qui favorise un bon maintien et guidage ;
- lesdits premier et second éléments déflecteurs présentent une largeur sensiblement égale à la moitié d'une largeur de la partie aval du convoyeur. De cette façon, les premier et seconds éléments déflecteurs peuvent constituer des parois latérales sur lesquelles les produits déviés peuvent prendre appui ;
- chacune desdites première et seconde bandes sans fin comporte une partie de bande parallèle à la direction d'amenée des produits, contigüe à ladite partie oblique, et en aval dans la direction de convoyage des produits. De cette façon, les produits déviés sont guidés par les deux déviateurs, après déviation de leur trajectoire initiale, avant d'être évacués ;
- la partie aval du convoyeur peut comporter au moins une paroi centrale de séparation desdites au moins deux files de produits. De cette façon, les produits alignés sur au moins deux files sont guidés en partie aval du convoyeur.

L'invention vise également un procédé de répartition des produits d'un convoyeur sur au moins deux files de produits, mettant en oeuvre une installation de répartition telle que définie ci avant.

Le procédé conforme à l'invention est remarquable en ce que les premier et second déviateur sont mis en oeuvre successivement pour répartir les produits en lots d'au moins un produit suivant lesdites au moins deux files sur le convoyeur.

Comme expliqué précédemment, c'est la mise en oeuvre successive des des déviateurs qui permet de pallier les inconvénients des solutions techniques de l'Etat de la Technique.

Suivant un mode de mise en oeuvre préféré, le convoyeur est entraîné à une vitesse d'amenée qui est supérieure à une vitesse d'entrainement desdits premier et second déviateurs dans la direction d'amenée.

Le procédé conforme à l'invention peut également comporter les caractéristiques suivantes, prises séparément ou en combinaison :
- lesdits premier et second déviateurs sont dépendants l'un de l'autre dans leur fonctionnement. Ainsi, les deux déviateurs fonctionnent chacun en permanence et agissent alternativement sur les produits ;
- ladite vitesse d'entrainement du convoyeur est supérieure à 105 % de la vitesse d'entrainement des premier et second déviateurs dans la direction d'amenée. Une survitesse de 5% est suffisante pour permettre une accumulation de produits au touche à touche en amont du déviateur ;
- le procédé comporte une étape de guidage des lots de produits au sein du dispositif de répartition grâce aux volumes libres créés entre les déviateurs et où les produits peuvent être contenus. Ainsi, les produits instables sont stabilisés après avoir été déviés et avant d'être évacués des déviateurs.

Pour pouvoir être exécutée, l'invention est exposée de façon suffisamment claire et complète dans la description suivante qui est, en plus, accompagnée de dessins illustrant le cas particulier d'une déviation sur deux voies, dans lesquels :
- la figure 1 est une vue de dessus d'une installation conforme à l'invention illustrée de façon schématique,
- la figure 2 est également une vue de dessus d'une autre installation conforme à l'invention illustrée de façon schématique,
- la figure 3 montre une caractéristique possible liée au mouvement relatif des déviateurs

Dans la description qui suit, les termes « inférieur », « supérieur », « gauche », « droite » etc... sont utilisés en référence aux dessins pour une plus grande facilité de compréhension. Ils ne doivent pas être compris comme étant des limitations de la portée de l'invention.

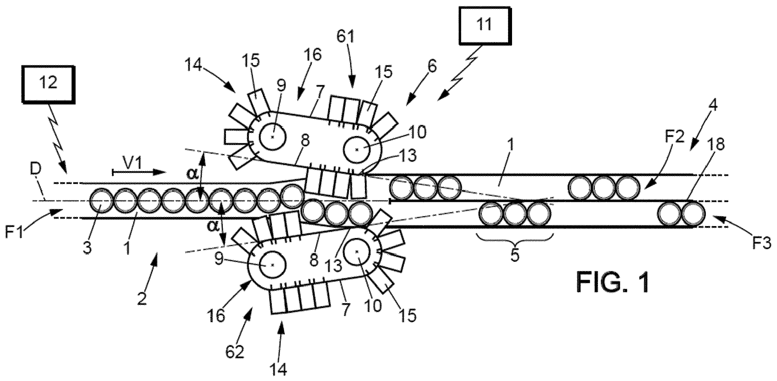

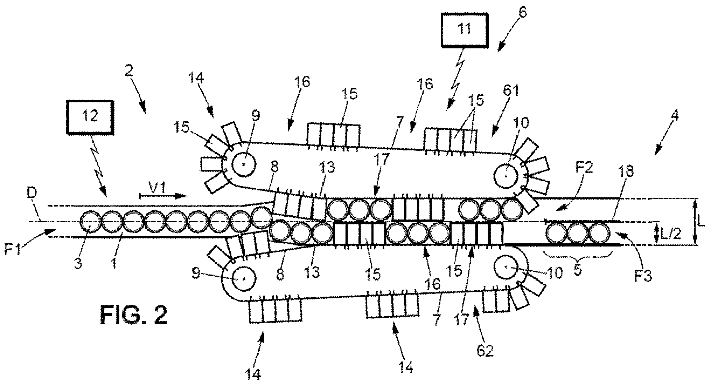

Les figures 1 et 2 montrent deux modes de réalisation d'une installation conforme à l'invention. Les installations ont en commun qu'elles comportent chacune un convoyeur 1, présentant une partie amont 2 où arrivent les produits 3 alignés les uns derrière les autres sur une file F1 et se touchant les uns et les autres, et une partie aval 4 où les produits sont déviés et préférablement répartis en lots 5, ou groupes, de produits 3, alignés sur deux files F2 et F3.

Les deux files F2 et F3 de lots de produits 3 en partie aval 4 se trouvent décalées de part et d'autre de la direction de la file F1 de produits de la partie amont 2 du convoyeur.

La direction de la file F1 correspond à la direction d'amenée D des produits 3 par le convoyeur 1.

Il devra être compris que le convoyeur 1 pourrait présenter une largeur constante entre la partie amont et la partie aval, sans toutefois sortir du cadre de l'invention. Pour cela, la largeur de convoyeur devra être telle qu'elle peut convoyer deux files F2 et F3 de produits 3 parallèles entre elles.

Le convoyeur 1 est entraîné en déplacement à une vitesse V1 qui est préférablement la même en amont et en aval. La vitesse à laquelle les produits 3 entrent dans l'installation (c'est-à-dire la vitesse d'amenée) est alors égale à la vitesse à laquelle ils sont évacués de l'installation.

Les produits 3 sont, par exemple, des boites, des bouteilles, des cannettes ou, de façon générale, toute sorte de flacons ou produit à déplacer.

Dans le cadre des exemples illustrés sur les figures 1 et 2, les lots de produits formés comportent chacun trois produits.

Il devra être entendu que l'installation n'est pas limitée à la formation de lots comportant trois produits, mais qu'elle s'étend à la formation de lots pouvant comporter plus ou moins de trois produits, chaque lot comportant toutefois préférablement au moins deux produits.

L'invention n'est pas davantage limitée à une répartition sur deux files de lots de produits. Une installation conforme à l'invention pourrait être agencée pour répartir les produits sur trois files voire plus.

L'installation comporte un dispositif de répartition 6 des produits 3 en lots 5 sur deux files F2 et F3, le dispositif de répartition 6 étant positionné entre la partie amont 2 et la partie aval 4 du convoyeur 1.

Plus exactement, le dispositif de répartition 6 comporte deux parties symétriques, disposées de part et d'autre du convoyeur 1.

Chacun des deux parties symétriques est un déviateur 61 ou 62, qui comporte une bande sans fin 7 disposée latéralement au convoyeur 1, qui comporte une partie oblique 8 par rapport à la direction d'amenée D. La partie oblique forme un angle aigu avec la direction d'amenée, l'angle étant ouvert vers l'amont des déviateurs 61 et 62.

Pour la compréhension de l'invention, la bande sans fin 7 illustrée au-dessus du convoyeur 1 sur les figures 1 et 2 sera appelée « première bande sans fin », et celle illustrée au-dessous du convoyeur 1 sera appelée « seconde bande sans fin ».

De même, le déviateur 61 illustrée au-dessus du convoyeur 1 sera appelé « premier déviateur », et le déviateur 62 illustré au-dessous du convoyeur 1 sera appelé « second déviateur ».

Chacune des bandes sans fin 7 entoure au moins deux roues parmi lesquelles une roue amont 9 et une roue aval 10.

La roue amont 9 est plus éloignée de l'axe médian du convoyeur que la roue aval 10.

L'une des deux roues amont 9 ou aval 10 des premier et second déviateurs 61 et 62 est entrainée en rotation par un moteur (non représenté) dont le fonctionnement est commandé par un module de commande 11.

L'autre roue (amont 9 ou aval 10) est montée folle et sert uniquement à guider la bande sans fin 7.

Un autre module de commande 12 commande le déplacement du convoyeur 1, notamment sa vitesse d'avance V1.

La partie oblique 8 des première et seconde bandes sans fin 7 est disposée de sorte que son extrémité aval 13 jouxte le bord du convoyeur 1. De plus, les deux extrémités aval 13 des deux parties obliques 8 sont au droit l'une de l'autre au regard de la direction d'amenée des produits.

Les deux parties obliques 8 forment chacune un angle α compris entre 0 et 45 ° avec la direction d'amenée D des produits 3 du convoyeur 1. Dans le cas illustré sur les figures, l'angle α est de 9°.

Les bandes sans fin 7 des premier et second déviateurs 61 et 62 portent chacun, respectivement, au moins un premier et second élément déflecteur 14.

Dans l'exemple illustré en figure 1, chacune des bandes sans fin 7 porte trois éléments déflecteurs 14 qui agissent successivement.

Dans l'exemple illustré en figure 2, les bandes sans fin 7 sont plus longues et portent chacune six éléments déflecteurs 14.

Tous les éléments déflecteurs 14 des modes de réalisations représentés comportent plusieurs taquets 15 disposés les un à la suite des autre, accrochés uniquement à la bande sans fin 7, de sorte à former un train de taquets 15.

L'avantage de prévoir les éléments déflecteurs 14 sous forme de trains de taquets 15 est de permettre de changer aisément la longueur des éléments déflecteurs 14 en ajoutant ou en retirant un taquet 15. De plus, la maintenance des éléments déflecteurs 14 est facilitée, car si un taquet est défectueux, il est plus aisé de le remplacer que de remplacer tout l'élément déflecteur 14.

On remarquera que la longueur des trains de taquets 15 correspond sensiblement à la longueur occupée par chacun des lots 5 de produits 3 sur le convoyeur 1, ce qui permet à chaque élément déflecteur de servir de guide pour le lot de produits qu'il a dévié.

On remarquera également que l'espace 16 séparant deux trains de taquets 15 sur les bandes sans fin 7 est également sensiblement égal à la longueur des trains de taquets 15 et des lots 5 de produits 3, ce qui permet à deux déflecteurs successifs d'un même déviateur de servir de délimitations longitudinales à l'espace disponible pour les produits déviés par l'autre déviateur.

En effet, et comme il sera expliqué par la suite, les espaces 16 séparant deux trains de taquets 15 successifs ont une fonction technique en rapport avec l'instabilité des produits 3 convoyés.

Les éléments déflecteurs 14 présentent une largeur qui est fonction de la largeur de la partie aval 4 du convoyeur 1.

Dans le cadre des deux exemples illustrés sur les figures 1 et 2, la largeur des éléments déflecteurs 14 (qui correspond à la hauteur des taquets 15 entre leur extrémité fixée à la bande sans fin 7 et l'extrémité libre orientée vers le convoyeur 1) est sensiblement égale à la moitié (L/2) de la largeur L de la partie aval 4 du convoyeur 1.

L'avantage d'une telle caractéristique de largeur L/2 des éléments déflecteurs 14 sera expliqué par la suite. Cette caractéristique est également en lien avec le convoyage de produits 3 instables.

Dans l'exemple d'installation illustré sur la figure 2 le dispositif déviateur assure une étape de guidage des lots 5 de produits 3 formés, répartis sur les deux files F2 et F3, suivant une direction parallèle la direction d'amenée D avant même que les lots 5 de produits 3 ne soient évacués du dispositif de répartition 6.

Pour ce faire, suivant l'installation montrée en figure 2, les bandes sans fin 7 des déviateurs 61 et 62 comportent une partie 17 de bande qui est parallèle à la direction d'amenée D. Dans le cadre de cet exemple, la partie 17 de bande est également parallèle aux bords du convoyeur 1. Les parties 17 sont contigües aux parties obliques 8.

Dans les deux exemples illustrés, les parties aval des convoyeurs 1 présentent chacune une paroi centrale 18 qui sépare les deux files F1 et F2 de lots 5 de produits 3.

Il va maintenant être fait référence à un procédé de mise en oeuvre des deux installations illustrées sur les figures 1 et 2, le procédé étant conforme au procédé selon l'invention.

Initialement, au démarrage de l'installation, les deux déviateurs 61 et 62 du dispositif de répartition 6 sont à l'arrêt, ainsi que le convoyeur 1.

Le convoyeur 1 est entrainé en déplacement à une vitesse V1 par commande du module de commande 12.

Les produits 3 sont disposés sur la partie amont 2 du convoyeur 1 sous la forme d'une file F1 de produits 3. Ils peuvent arriver au niveau du dispositif de répartition 6 de façon quelconque, ou bien à intervalles réguliers.

Lorsque le premier produit 3 de la file F1 de produits 3 arrive au niveau du dispositif de répartition 6, il vient buter contre le dernier taquet 15 d'un train de taquets 15 du premier déviateur 61 (ou du second déviateur 62) qui arrête le produit 3 dans sa course. Les produits 3 suivants de la file F1 s'accumulent alors derrière le premier produit 3 arrêté par le taquet 15 sous l'effet de la survitesse du convoyeur 1. Les produits 3 forment alors une file F1 de produits au touche à touche, accumulés les uns derrière les autres depuis un élément déflecteur 14.

Le dispositif de répartition 6 est alors mis en fonctionnement, par commande du module de commande 11. La mise en fonctionnement du dispositif de répartition 6 entraine le mouvement des deux bandes sans fin des premier et second déviateurs 61 et 62. En effet, les deux déviateurs 61 et 62 fonctionnent ensemble : ils ne sont pas utilisables indépendamment l'un de l'autre suivant ce mode de réalisation.

De plus, les bandes sans fin 7 des premier et second déviateurs 61 et 62 avancent à des vitesses identiques.

Par ailleurs, pour que la vitesse du convoyeur 1 soit supérieure à la vitesse d'avance des bandes sans fin 7, le module de commande 11 impose aux bandes sans fin des déviateurs 61 et 62 une vitesse d'avance qui est inférieure à la vitesse d'avance V1 du convoyeur 1, de sorte que les produits sont freinés dans leur course par les taquets 15 des éléments déflecteurs 14 et restent ainsi toujours accumulés et référencés sous la forme d'une file F1 en partie amont 2 du convoyeur 1.

La vitesse d'avance des deux bandes sans fin 7 des premier et second déviateurs 61 et 62 est inférieure d'environ au moins 5% à la vitesse d'avance V1 du convoyeur.

Lorsque les premier et second déviateurs sont actionnés, les premier et second éléments déflecteurs 14 qu'ils comportent sont mis en oeuvre successivement (ou alternativement, à tour de rôle, dans les cas où il n'y a que deux déviateurs) sur le convoyeur 1, car les éléments déflecteurs 14 sont décalés l'un par rapport à l'autre, transversalement au convoyeur 1, quand les éléments déflecteurs 14 se trouvent sur le convoyeur 1 (voir précédemment).

Ainsi, concernant l'installation montrée en figure 1, lorsqu'un élément déflecteur 14 du premier déviateur 61 s'introduit sur le convoyeur, l'élément déflecteur 14 du second déviateur 62 s'apprête à être évacué du convoyeur 1.

Concernant l'installation montrée en figure 2, lorsqu'un élément déflecteur du premier déviateur 61 s'introduit sur le convoyeur 1, l'élément déflecteur 14 du second déviateur 62 se trouve plus en aval.

De façon plus précise, l'extrémité amont d'un élément déflecteur 14 du premier déviateur 61 coïncide à peu près avec l'extrémité aval d'un élément déflecteur 14 du second déviateur 62, ou inversement. De cette façon, quand les bandes sans fin 7 des deux déviateurs 61 et 62 sont entrainées en déplacement, les éléments déflecteurs 14 des deux bandes sans fin 7 ne se font jamais face sur le convoyeur mais se suivent.

Comme les éléments déflecteurs des deux bandes sont sensiblement de même longueur, et comme les espaces laissés entre deux éléments déflecteurs consécutifs sont d'une longueur sensiblement égale, un élément déflecteur du premier déviateur 61 fait face à un espace vide 16 entre deux éléments déflecteurs 14 du second déviateur, lorsque les éléments déflecteurs 14 se trouvent sur le convoyeur 1.

Lorsque le dispositif de répartition est mis en oeuvre, le produit 3 en tête de file F1 prend appui sur le bord aval du premier élément déflecteur 14 qu'il rencontre dans sa course. Le produit 3 de tête est ainsi référencé.

Comme l'extrémité aval d'un élément déflecteur 14 d'un déviateur coïncide essentiellement avec l'extrémité amont d'un élément déflecteur 14 de l'autre déviateur, le produit 3 de file F1 et les produits 3 qui se trouvent juste derrière le produit 3 de la file, référencé par appui contre un élément déflecteur 14, par exemple, se trouvent également à hauteur de l'élément déflecteur 14de l'autre déviateur 62.

En étant entrainé en déplacement, les bandes sans fin 7 entraînent également en déplacement les trains de taquets 15 (ou élément déflecteur 14).

Le train de taquets 15 du déviateur 62 pousse latéralement chaque produit 3, sur la moitié gauche du convoyeur formant la file F2.

Le dernier taquet du train de taquets 15 du déviateur 62 poussant les produits 3 vient alors rencontrer, à son tour, un produit de file F1 qu'il référence.

Le train de taquets 15 du déviateur 61 pousse alors latéralement un lot de produit 3 sur la moitié droite du convoyeur 1 formant la file F3.

Et ainsi de suite.

Comme les espaces 16 entre les éléments déflecteurs 14 d'un premier déviateur présentent une longueur sensiblement égale à la longueur des lots 5 de produits déviés par les éléments déflecteurs 14 de l'autre déviateur, chaque lot 5 de produits 3 dévié est inséré entre deux éléments déflecteurs 14 d'un déviateur. Chaque lot 5 de produits 3 est alors encadré par deux éléments déflecteurs 14 d'un même déviateur 61 ou 62, à l'avant et à l'arrière du lot, et chaque lot est encadré latéralement par une partie 17 de bande sans fin et l'élément déflecteur 14 de l'autre déviateur (61 ou 62). Ainsi, les produits 3, même instables, sont maintenus lors de leur positionnement sur deux voies.

L'invention peut ainsi permettre de créer et stabiliser des lots de produits.

En sortie du dispositif de répartition 6, les lots 5 de produits 3 sont évacués par escamotage des trains de taquets 15, compte tenu de la rotation autour d'un arbre de retour.

On rappelle que la vitesse V1 d'avance du convoyeur 1 est supérieure à la vitesse longitudinale des déviateurs. Les lots 5 de produits 3 qui sont formés sont donc légèrement freinés dans leur course par le dispositif de répartition 6.

Lorsque le dernier taquet d'un train de taquets 15, situé devant un lot 5 de produit, est escamoté, il n'existe plus aucun frein, et le lot 5 de produits est alors de nouveau entraîné en déplacement à une vitesse d'avance V1 qui est celle du convoyeur 1.

Le lot 5 de produits s'éloigne alors rapidement de l'élément déflecteur 14 du train de taquets qui le suit en aval.

Grâce à cette accélération, le premier taquet du train de taquets 15 qui suit le dernier produit 3 du lot 5 ne pousse pas le dernier produit 3, de sorte qu'il n'y a aucun déséquilibre du dernier produit 3 susceptible de déséquilibrer à son tour le lot 5 de produits formé.

Par ailleurs, des espaces plus grands se créent entre les lots de produits sur la partie aval 4 du convoyeur 1.

Dans des réalisations possibles, qui peuvent aisément se comprendre avec la figure 2, le dispositif de répartition 6 n'est pas motorisé, ce qui signifie que les déviateurs 61, 62, ne sont pas entraînés par une motorisation active externe, du type motorisation d'entraînement d'une courroie ou bande 7 sur laquelle sont montés les déflecteurs 14. Le mouvement des déflecteurs 14 dans la direction d'amenée D est alors provoqué par contact avec les produits 3 eux-mêmes, ces produits 3 étant mis en mouvement par le convoyeur 1 sur lequel ils reposent. On obtient une configuration simple, robuste et peu couteuse, où c'est le convoyeur 1 qui assure le déplacement longitudinal des produits 3, ce déplacement longitudinal entraînant ensuite les déviateurs 61, 62, et plus particulièrement leurs déflecteurs 14. La position transversale des déflecteurs 14 dépendant de leur position longitudinale, leur avance longitudinale a pour effet de les déplacer transversalement et de donc décaler transversalement les produits 3 entrants, comme il a été décrit.

Entre deux déflecteurs 14 successifs, rattachés respectivement à deux déviateurs 61, 62 différents, les produits 3 sont donc en colonne compacte, en contact contre le déflecteur 14 devant eux en aval dans le sens du flux de produits 3. Les produits 3 en lots, placés entre deux déflecteurs 14 successifs, agissent donc mécaniquement par contact sur le déflecteur 14 devant eux, en aval dans le sens du flux, et l'entraînent dans leur déplacement, provoqué par le convoyeur 1. Les déflecteurs 14 d'un même déviateur 61, 62 étant reliés, déplacer l'un d'eux a pour effet de déplacer les autres. Ainsi, l'entraînement longitudinal de l'un des déflecteurs 14 provoque à son tour le déplacement longitudinal des autres déflecteurs 14 du même déviateur 61, 62. L'avance du premier déflecteur 14 dans le sens de la direction d'amenée s'accompagnant, par construction, de son avance transversale en direction du deuxième déflecteur 14, opposé, les produits 3 sont déviés transversalement par le premier déflecteur 14 en direction du deuxième. Bien entendu, plusieurs lots de produits 3 peuvent simultanément pousser plusieurs déflecteurs 14 du même déviateur.

Ainsi, dans ces configurations, les déviateurs 61, 62 ne sont pas motorisés mais entraînés dans leur mouvement par la poussée des produits (3) sur le convoyeur 1 qui les entraîne.

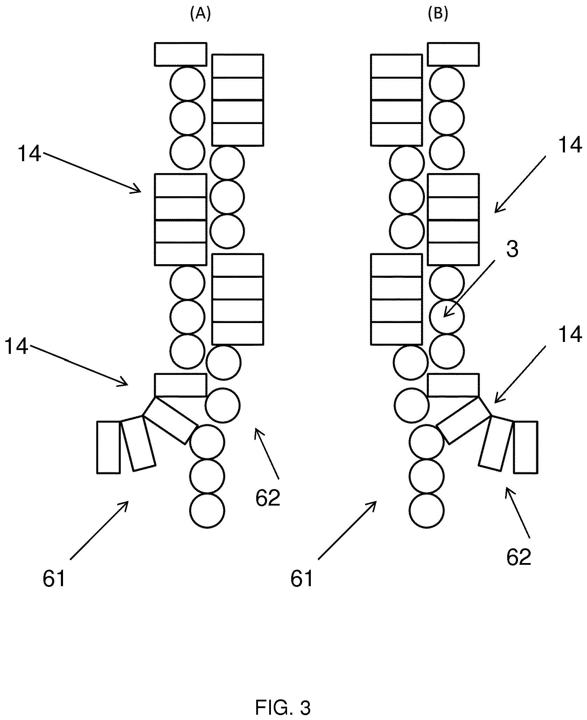

Selon une autre caractéristique avantageuse possible, illustrée en figure 3, un mouvement relatif longitudinal est possible entre les déviateurs 61, 62, et, plus particulièrement entre leurs déflecteurs 14 : les déviateurs 61, 62 peuvent être déplacés l'un par rapport à l'autre dans la zone où ils se font face, plus particulièrement dans la direction d'amenée. On comprend que dans la zone où les déviateurs 61, 62 se font face, et dans laquelle circulent, entre les deux déviateurs 61, 62, les produits 3 déviés, les déflecteurs 14 de chaque déviateur circulent sensiblement à la même vitesse, cadencée par la vitesse à laquelle arrivent les produits en entrée. Certains modes de réalisations sont toutefois tels que, dans la zone centrale où ils se font face, le contrôle des déviateurs 61 62 et leur montage sont tels que la vitesse des déflecteurs 14 d'un déviateur 61 peut être différente de celle des déflecteurs 14 de l'autre déviateur 62, au moins ponctuellement. Ainsi, grâce à cette mobilité relative, il est possible de générer ou augmenter, dans cette zone centrale, un décalage longitudinal dans la direction d'amenée entre les déflecteurs 14 d'un déviateur 61 et ceux de l'autre déviateur 62 pour écarter leurs déflecteurs 14 à l'occasion du transfert latéral de produits 3. Les mouvements des déviateurs 61 et 62 sont donc au moins partiellement indépendants. Grâce à ce décalage longitudinal, les déflecteurs 14 ne se superposent alors plus dans la direction d'amenée à l'endroit de la déviation. Cette possibilité de mouvement relatif longitudinal permet d'éviter les coincements, comme décrit ci-dessous en lien avec la figure 3.

Lorsque qu'un premier déflecteur 14 d'un premier déviateur 61, à gauche dans la figure 3A, arrive contre des produits 3 qu'il doit décaler transversalement, on utilise la possibilité de mouvement relatif dans la direction d'amenée pour provoquer ou augmenter un espace longitudinal entre ce premier déflecteur 14 et le déflecteur 14 précédent, juste en aval dans le sens du flux, et donc appartenant au deuxième déviateur 62 en vis-à-vis, à droite dans la figure 3A, pour les écarter suffisamment. Ce décalage longitudinal peut se faire en ralentissant le premier déviateur 61 en approche et/ou en accélérant le deuxième déviateur 62 dont le dernier déflecteur 14 a déjà agi sur les produits 3. Préférablement, on accélère le deuxième déviateur 62 qui vient d'agir, à droite dans la figure 3A.

Cet espace longitudinal est aussi créé lors de l'opération suivante, illustrée en figure 3B. Lorsque le premier déflecteur 14, à gauche dans la figure 3B, a entièrement décalé transversalement les produits 3 et qu'un deuxième déflecteur 14 du deuxième déviateur 62 en vis-à-vis, à droite dans la figure 3B, arrive à son tour pour dévier transversalement un lot de produits 3, on effectue l'opération inverse, à savoir créer un espace entre ce deuxième déflecteur 14, à droite dans la figure 3B, et le premier déflecteur 14 du premier déviateur 61, à gauche dans la figure 3B. Comme le montre la figure 3, on inverse donc successivement la position relative en avance ou en retard des premier et deuxième déviateurs 61, 62 : en zone centrale c'est alternativement chaque déviateur 61 qui est amené devant l'autre, au fil des lots à décaler alternativement d'un côté puis l'autre.

Cet espace longitudinal réduit de façon significative les problèmes de coincement qui peuvent se manifester quand la colonne de produits 3 est poussée transversalement par un déflecteur 14 vers un autre en vis-à-vis et qui le précède.

Ainsi, les premier et second déviateurs 61, 62 peuvent être déplacés l'un par rapport à l'autre dans la zone où ils se font face, les déviateurs 61, 62 étant écartés longitudinalement l'un de l'autre lorsque l'un d'eux entame son action de déviation transversale. Lors de ces variations de vitesse, on conserve toutefois préférablement la survitesse du convoyeur par rapport aux déflecteurs 14, les produits 3 restant donc, malgré les variations de vitesse, toujours au contact du déflecteur 14 juste devant eux, en aval dans le sens du flux.

On comprend de la description qui précède comment l'invention permet de créer des lots de produits à partir du dispositif de répartition 6 associé à un choix judicieux de vitesses d'avance du convoyeur et des bandes sans fin 7.

Il devra être compris que l'invention n'est pas spécifiquement limitée aux deux modes de réalisation présentés ci avant et qu'elle s'étend à la mise en oeuvre de tout moyen équivalent. En effet, les taquets peuvent dépasser l'axe médian, pour bien séparer les colonnes de produits d'un côté ou de l'autre (ils se chevaucheraient alors).

## Revendications

1. Installation pour répartir sur au moins deux files (F2, F3) des produits (3) initialement alignés sur une seule file (F1), ladite installation comportant :
un convoyeur (1) présentant une partie amont (2) et une partie aval (4), ladite partie amont (2) étant apte à convoyer ladite seule file (F1) de produits (F1), suivant une direction d'amenée (D) et une vitesse d'amenée (V1), et ladite partie aval (4) étant apte à convoyer lesdits produits (3) répartis sur lesdites au moins deux files (F2, F3),
un dispositif de répartition (6), placé entre la partie amont (2) et la partie aval (4) du convoyeur (1), le dispositif de répartition (6) comportant un premier déviateur (61) pour décaler les produits transversalement à la direction d'amenée (D), disposé latéralement au convoyeur (1)
l'installation étant **caractérisée en ce que** :
le dispositif de répartition (6) comporte au moins un second déviateur (62), pour décaler les produits transversalement à la direction d'amenée (D), disposé latéralement au convoyeur (1) et en vis-à-vis du premier déviateur (61),
les premier et second déviateurs (61, 62) étant agencés pour agir l'un après l'autre sur la file de produits.

2. Installation selon la revendication 1, **caractérisée en ce qu'**elle comporte des moyens (11, 12) d'entrainement en déplacement du convoyeur (1) aptes à convoyer lesdits produits (3) à une vitesse (V1) qui est supérieure à une vitesse de déplacement des premier et second déviateurs (61, 62) dans la direction d'amenée (D).

3. Installation selon l'une quelconque des revendications 1 ou 2, **caractérisée en ce que**
le premier déviateur (61) comprend une bande (7) sans fin présentant au moins une partie (8) agencée en oblique par rapport à la direction d'amenée (D) du convoyeur (1) pour pousser les produits (3) transversalement, la partie oblique formant un angle aigu avec la direction d'amenée (D), l'angle étant ouvert vers la partie amont (2), et sur laquelle est monté au moins un premier élément déflecteur (14) apte à dévier au moins un produit (3), le deuxième déviateur comprend lui aussi une bande (7) sans fin présentant au moins une partie (8) agencée en oblique par rapport à la direction d'amenée (D) du convoyeur (1) pour pousser les produits (3) transversalement, la partie oblique formant un angle aigu avec la direction d'amenée, l'angle étant ouvert vers la partie amont (2), et sur laquelle est monté au moins un second élément déflecteur (14) apte à dévier au moins un produit (3), les premier et second déviateurs (61, 62) étant agencés en miroir l'un de l'autre et pour mettre en oeuvre successivement lesdits au moins un premier et second éléments déflecteurs (14) sur ledit convoyeur (1).

4. Installation selon la revendication 3, **caractérisée en ce que** lesdits au moins un premier et second éléments déflecteurs (14) comportent chacun plusieurs taquets (15) disposés les uns à la suite des autres de sorte à former un train de taquets (15).

5. Installation selon la revendication 3 ou 4, **caractérisée en ce que** lesdits au moins un premier et second éléments déflecteurs (14) présentent une même longueur qui est sensiblement égale à la longueur d'un lot (5) d'un plusieurs produits (3) à former.

6. Installation selon l'une quelconque des revendications 3 à 5, **caractérisée en ce que** lesdites première et seconde bandes (7) sans fin comportent chacune plusieurs éléments déflecteurs (14), espacés les uns des autres d'une distance sensiblement identique à leur longueur, de sorte que le déflecteur (14) d'un déviateur puisse se trouver entre deux déflecteurs (14) de l'autre déviateur ce qui permet alors de définir un espace de convoyage clos pour le lot (5).

7. Installation selon l'une quelconque des revendications 3 à 6, **caractérisée en ce que** lesdits premier et second éléments déflecteurs (14) présentent une largeur sensiblement égale à la moitié d'une largeur (L) de la partie aval du convoyeur (1).

8. Installation selon l'une quelconque des revendications 3 à 7, **caractérisée en ce que** chacune desdites première et seconde bandes (7) sans fin comporte une partie (17) de bande parallèle à la direction d'amenée (D) des produits, contigüe à ladite partie (8) oblique, et en aval dans la direction de convoyage des produits (3).

9. Installation selon l'une quelconque des revendications 1 à 8, où les déviateurs (61, 62) ne sont pas motorisés mais entraînés dans leur mouvement par la poussée des produits (3) sur le convoyeur (1) qui les entraîne.

10. Installation selon l'une quelconque des revendications 1 à 9, où les déviateurs (61, 62) peuvent être déplacés l'un par rapport à l'autre dans la zone où ils se font face.

11. Procédé de répartition des produits (3) d'un convoyeur (1) sur au moins deux files (F2, F3) de produits (3), mettant en oeuvre une installation de répartition selon l'une quelconque des revendications précédentes, procédé **caractérisé en ce que** les premier et second déviateur (61, 62) sont mis en oeuvre successivement pour répartir les produits (3) en lots (5) d'au moins un produit (3) suivant lesdites au moins deux files (F2, F3) sur le convoyeur (1).

12. Procédé selon la revendication 11, **caractérisé en ce que** le convoyeur est entraîné à une vitesse d'amenée (V1) qui est supérieure à une vitesse d'entrainement desdits premier et second déviateurs (61, 62) dans la direction d'amenée (D).

13. Procédé selon l'une quelconque des revendications 11 ou 12, **caractérisé en ce que** lesdits premier et second déviateurs (61, 62) sont dépendants l'un de l'autre dans leur fonctionnement.

14. Procédé selon l'une quelconque des revendications 11 à 13, **caractérisé en ce que** lesdits premier et second déviateurs (61, 62) peuvent être déplacés l'un par rapport à l'autre dans la zone où ils se font face, les déviateurs (61, 62) étant écartés longitudinalement l'un de l'autre lorsque l'un d'eux entame son action de déviation transversale.

15. Procédé selon l'une quelconque des revendications 11 à 14 **caractérisé en ce que** ladite vitesse (V1) d'entrainement du convoyeur (1) est supérieure à 105 % de la vitesse d'entrainement des premier et second déviateurs (61, 62) dans la direction d'amenée (D).

16. Procédé selon l'une quelconque des revendications 11 à 15, **caractérisé en ce que** il comporte une étape de guidage des lots (5) de produits (3) au sein du dispositif de répartition (6), grâce aux volumes libres créés entre les déviateurs (61, 62) et où les produits (3) peuvent être contenus.
